# EUROPEAN PATENT SPECIFICATION

(11) **EP 3 952 182 B1**
(45) Date of publication and mention of the grant of the patent: **23.04.2025**
(21) Application number: 20778059.4
(22) Date of filing: 18.03.2020
(51) Int. Cl.: H04L 5/00

(54) **DOWNLINK ASSIGNMENT INDEX DETERMINATION METHOD, TERMINAL, AND NETWORK DEVICE**
VERFAHREN ZUR BESTIMMUNG EINES DOWNLINK-ZUWEISUNGSINDEX, ENDGERÄT UND NETZWERKVORRICHTUNG
PROCÉDÉ DE DÉTERMINATION DE DAI (DOWNLINK ASSIGNMENT INDEX), TERMINAL, ET DISPOSITIF DE RÉSEAU

(30) Priority: 28.03.2019 CN 201910245274
(43) Date of publication of application: 09.02.2022
(73) Proprietor: VIVO MOBILE COMMUNICATION CO., LTD., Dongguan, Guangdong 523860 (CN)
(72) Inventor: SHEN, Xiaodong, Dongguan, Guangdong 523860 (CN); LU, Zhi, Dongguan, Guangdong 523860 (CN); LI, Na, Dongguan, Guangdong 523860 (CN); CHEN, Xiaohang, Dongguan, Guangdong 523860 (CN)
(74) Representative: Lavoix
(86) International application number: PCT/CN2020/079889
(87) International publication number: WO 2020/192516

(56) References cited:
- WO-A1-2019/033384
- CN-A- 102 263 620
- CN-A- 103 532 688
- CN-A- 105 208 664
- US-A1- 2019 045 489
- NTT DOCOMO, INC.: "Enhancements to Scheduling/HARQ/CSI Processing timeline for URLLC", R1-1813327 3GPP TSG RAN WG1 MEETING #95 R1-1813327, 16 November 2018 (2018-11-16), XP051479637

## Description

### TECHNICAL FIELD

The present disclosure relates to the field of communications technologies, and in particular, to a downlink assignment index (Downlink Assignment Index, DAI) determining method, a terminal and a network device.

### BACKGROUND

In a mobile communications system, a downlink assignment index (Downlink Assignment Index, DAI) may indicate an amount of signaling sent by a serving cell until a current subframe. A terminal can discover, in time based on a value of the DAI, that no signaling is received. For example, the DAI may indicate an amount of downlink control information (Downlink Control Information, DCI) sent in a hybrid automatic repeat request (Hybrid Automatic Repeat Request, HARQ) feedback window of a serving cell until the current subframe. The terminal can discover, in time based on the value of the DAI, that no DCI is received.

However, there is a scenario of multiple concurrent services in some mobile communications systems (for example, a fifth-generation (the fifth generation, 5G) mobile communications system), for example, a terminal receives a low-latency service of ultra reliable low latency communications (Ultra Reliable Low Latency Communications, URLLC) while performing high-speed enhanced mobile broadband (Enhanced Mobile Broadband, eMBB) downloading. In addition, different services have different requirements. In this way, multiple services are counted by using a uniform DAI. Therefore, it is prone to errors, and the reliability of signaling transmission is poor.

WO 2019/033384 A1 discloses that in a terminal, an HARQ-ACK generator generates one or more response signals for respective code block groups based on a parameter included in each of a plurality of downlink control signals, the code block groups forming each of a plurality of transport blocks to be assigned by the plurality of downlink control signals, the parameter relating to the number of code block groups. A transmitter collectively transmits the response signals for the respective code block groups. A value of the parameter herein is to be configured, at least using a first granularity coarser than a second granularity in units of the code block groups.

US 2019/045489 A1 discloses that a UE may receive a physical downlink control channel (PDCCH) that schedules a physical downlink shared channel (PDSCH) in a slot, and on a component carrier (CC) of a plurality of CCs. The PDCCH may include a total downlink assignment index (DAI) and a counter DAI for hybrid automatic repeat request acknowledgement (HARQ-ACK) feedback of the PDSCH. The total DAI may indicate a total number of pairs of CCs and slots for the HARQ-ACK feedback. The UE may encode the HARQ-ACK feedback to include a bit that indicates whether the PDSCH is successfully decoded. A size of the HARQ-ACK feedback may be based on the total DAI, and a position of the bit may be based on the counter DAI.

### SUMMARY

Embodiments of the present disclosure provide a DAI determining method, a terminal and a network device, to resolve a problem of relatively poor reliability of signaling transmission. The object of the invention is achieved by the subject-matter of the independent claims. The dependent claims describe advantageous embodiments. The scope of protection of the invention is limited by the appended claims.

According to a first aspect, an embodiment of the present disclosure provides a DAI determining method, which is defined in claim 1.

According to a second aspect, an embodiment of the present disclosure provides a DAI determining method, which is defined in claim 7.

According to a third aspect, an embodiment of the present disclosure provides a terminal, which is defined in claim 11.

According to a fourth aspect, an embodiment of the present disclosure provides a network device, which is defined in claim 12.

Further advantageous embodiments of the present disclosure are indicated in the dependent claims.

It is to be understood that both the foregoing general description and the following detailed description are exemplary only, and are not restrictive of the present disclosure.

### BRIEF DESCRIPTION OF DRAWINGS

FIG. 1 is a structural diagram of a network system to which an embodiment of the present disclosure is applicable;
FIG. 2 is a flowchart of a DAI determining method according to an embodiment of the present disclosure;
FIG. 3 is a schematic diagram of a DAI according to an embodiment of the present disclosure;
FIG. 4 is a schematic diagram of another DAI determining method according to an embodiment of the present disclosure;
FIG. 5 is a structural diagram of a terminal according to an embodiment of the present disclosure;
FIG. 6 is a structural diagram of a network device according to an embodiment of the present disclosure;
FIG. 7 is a structural diagram of another terminal according to an embodiment of the present disclosure; and
FIG. 8 is a structural diagram of another network device according to an embodiment of the present disclosure.

### DESCRIPTION OF EMBODIMENTS

The following clearly and completely describes the technical solutions in the embodiments of the present disclosure with reference to the accompanying drawings in the embodiments of the present disclosure. Apparently, the described embodiments are some rather than all of the embodiments of the present disclosure. Based on the embodiments of the present disclosure, all other embodiments obtained by a person of ordinary skill in the art without creative efforts shall fall within the protection scope of the present disclosure.

The term "include" and any modification thereof in the specification and claims of this application are intended to cover non-exclusive inclusion, for example, processes, methods, systems, products, or devices that contain a series of steps or units are not necessarily limited to those steps or units that are clearly listed, but may include other steps or units that are not clearly listed or are inherent to these processes, methods, products, or devices. In addition, "and/or" is used in the specification and claims to indicate at least one of connected objects, for example, A and/or B indicates three cases: only A exists, only B exists, and both A and B exist.

In the embodiments of the present disclosure, words such as "exemplary" or "for example" are used to indicate an example, an instance, or descriptions. Any embodiment or design scheme described as "exemplary" or "an example" in the embodiments of the present disclosure should not be construed as being optional or advantageous than other embodiments or design schemes. Specifically, the words such as "exemplary" or "for example" are used to present related concepts in a specific manner.

The embodiments of the present disclosure are described below with reference to the accompanying drawings. A downlink assignment index determining method, a terminal, and a network device that are provided in the embodiments of the present disclosure may be applied to a wireless communications system. The wireless communications system may be a 5G system, an evolved long term evolution (Evolved Long Term Evolution, eLTE) system, a long term evolution (Long Term Evolution, LTE) system, a subsequent evolved communications system, or the like.

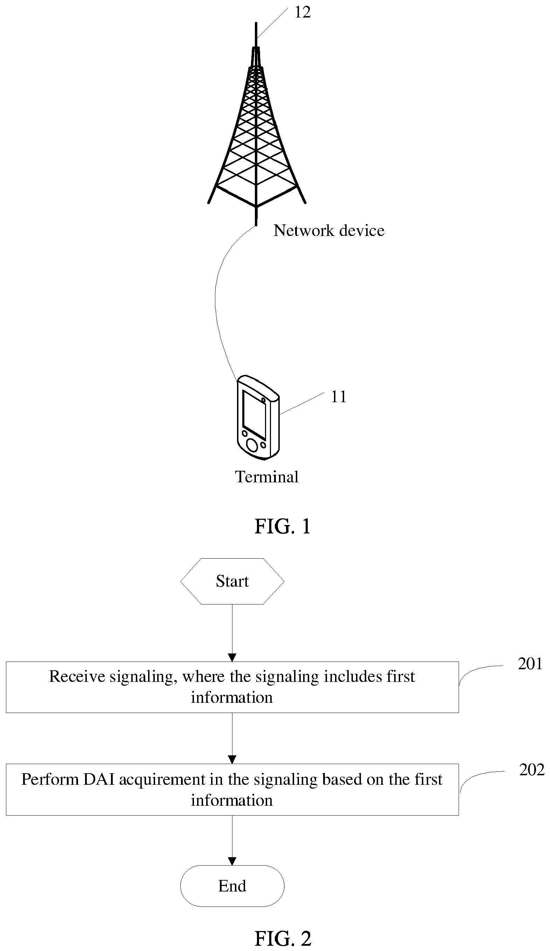

FIG. 1 is a structural diagram of a network system to which an embodiment of the present disclosure is applicable. As shown in FIG. 1, the network system includes a terminal 11 and a network device 12. The terminal 11 may be user equipment (User Equipment, UE) or another terminal device side device such as a mobile phone, a tablet personal computer (Tablet Personal Computer), a laptop computer (Laptop Computer), a personal digital assistant (Personal Digital Assistant, PDA), a mobile internet device (Mobile Internet Device, MID), a wearable device (Wearable Device), or a robot. It should be noted that a specific type of the terminal 11 is not limited in the embodiments of the present disclosure. The network device 12 may be a fourth generation (the fourth generation, 4G) base station, a 5G base station, a base station of a later version, or a base station in another communications system, or may be referred to as a NodeB, an evolved NodeB, a transmission reception point (Transmission Reception Point, TRP), an access point (Access Point, AP), or another word in the field. The network device is not limited to a specific technical term provided that a same technical effect is achieved. In addition, the network device 12 may be a master node (Master Node, MN) or a secondary node (Secondary Node, SN). It should be noted that in the embodiments of the present disclosure, only the 5G base station is used as an example, but a specific type of the network device is not limited.

FIG. 2 is a flowchart of a DAI determining method according to an embodiment of the present disclosure. The method is applied to a terminal. As shown in FIG. 2, the method includes the following steps.

Step 201: Receive signaling, where the signaling includes first information.

The signaling may be physical layer signaling or higher layer signaling, for example, the signaling is physical downlink control channel (Physical downlink control channel, PDCCH) signaling, such as DCI.

The first information may be used to indicate whether the signaling includes the DAI, or is used to indicate a type of the DAI in the signaling. The indication herein may be an explicit indication or an implicit indication.

Step 202: Perform DAI identification in the signaling based on the first information, where the DAI identification includes at least one of the following:
determining whether the signaling includes a DAI; and
identifying a type of the DAI in the signaling.

The determining whether the signaling includes a DAI may be: determining whether the signaling includes the DAI. This is because in this embodiment of the present disclosure, the signaling may include or may not include the DAI, to adapt to requirements for multiple services and multiple scenarios.

The identifying a type of the DAI in the signaling may be: identifying the type of the DAI when the signaling includes the DAI, to support configuration of different DAIs for different types.

In this embodiment of the present disclosure, the type of the DAI may be a service type, a signaling type, an identifier type, a control channel configuration type, a service priority type, a resource type, a modulation and coding scheme (Modulation and Coding Scheme, MCS) type, a codebook type, or the like corresponding to the DAI.

It should be noted that the identifying a type of the DAI in the signaling may be: identifying the type of the DAI in the signaling when the signaling includes the DAI by default; or may be: identifying the type of the DAI in the signaling when it is determined, by using the foregoing steps, that the signaling includes the DAI.

In this embodiment of the present disclosure, by using the foregoing steps, whether the signaling includes the DAI may be determined based on the first information, so that a case in which the signaling includes or does not include the DAI can be supported. In other words, the signaling may be flexibly configured to include or not include the DAI, for example, some services are not configured with the DAI, and other services are configured with the DAI, to avoid errors caused when different services share the same DAI, thereby improving the reliability of signaling transmission.

In addition, in this embodiment of the present disclosure, by using the foregoing steps, the type of the DAI in the signaling may be identified based on the first information, so that corresponding DAIs can be independently configured for different types, to avoid errors caused when different types share the same DAI, thereby improving the reliability of signaling transmission.

In an optional implementation, when the signaling is signaling for a first service, the signaling includes the DAI; or
when the signaling is signaling for a second service, the signaling does not include the DAI.

The first service and the second service may be two concurrent services, or certainly, may be two nonconcurrent services.

In addition, the first service and the second service may be services of two different service types, for example, URLLC and eMBB; or the first service and the second service may be services in two different signaling formats; or the first service and the second service may be services of two different control channel configurations; or the first service and the second service may be services of two different priorities; or the first service and the second service may be services of two different transmission resources; or the first service and the second service may be services of two different pilot mapping types; or the first service and the second service may be services of two different MCS configurations; or the first service and the second service may be services of two different hybrid automatic repeat request acknowledgment codebooks (Hybrid Automatic Repeat request Acknowledgement codebook, HARQ-ACK codebook).

In this implementation, because reliability of signaling (for example, a PDCCH) of different services is not the same, not receiving of all signaling (for example, PDCCHs) needs to be ensured by the DAI. Therefore, signaling (for example, scheduled PDCCHs) that carries different services may be enabled/disabled by using different policies, or a field/function of the DAI is added/hidden, to save signaling overheads and improve the reliability of signaling transmission.

For example, a future 5G mobile communications system needs to adapt to more diversified scenarios and service requirements. Main scenarios of 5G may include: eMBB, URLLC, and massive machine type communication (Massive Machine Type Communication, mMTC). These scenarios impose requirements such as high reliability, a low delay, high bandwidth, and wide coverage on a system. In addition, these different services may have different quality of service (quality of service, QoS) requirements. For example, the URLLC supports low-delay and high-reliability services. To achieve higher reliability, data needs to be transmitted by using a lower bit rate, and a faster and more accurate channel state information (Channel State Information, CSI) feedback is required. An eMBB service supports a requirement for a high throughput, but is less sensitive to a delay and reliability than a URLLC service. In addition, some terminals may support services of different numerologies (numerology). The terminals support both low-delay and high-reliability URLLC services and large-capacity and high-rate eMBB services. In this way, because the eMBB service has relatively low reliability, a PDCCH for scheduling the eMBB service needs to include a DAI field. However, the URLLC service has relatively high reliability, so that a PDCCH for scheduling the URLLC service may not need to include the DAI field. In this way, DCI overheads are reduced, and performance of control signaling receiving is improved.

It should be noted that, in this embodiment of the present disclosure, a DAI mechanism can ensure that the terminal can detect a PDCCH in a timely manner when the PDCCH is missing and not received.

In an optional implementation, the type of the DAI corresponds to a type of the signaling.

The type of the signaling may be another type such as a service type, a format type, an identifier type, a control channel configuration type, a service priority type, a resource type, an MCS type, or a HARQ-ACK codebook type.

That the type of the DAI corresponds to a type of the signaling may be that the type of the DAI matches or is the same as the type of the signaling.

For example, if a service priority type of the signaling is a priority 1, the type of the DAI is the priority 1, that is, the DAI is used to count signaling of the priority 1. For another example, if a signaling format type of the signaling is a signaling format 1, the type of the DAI is the signaling format 1, that is, the DAI is used to count signaling in the signaling format 1. For another example, if the signaling is signaling of a service type 1, the type of the DAI is the service type 1, that is, the DAI is used to count signaling of the service type 1. These are not listed one by one herein.

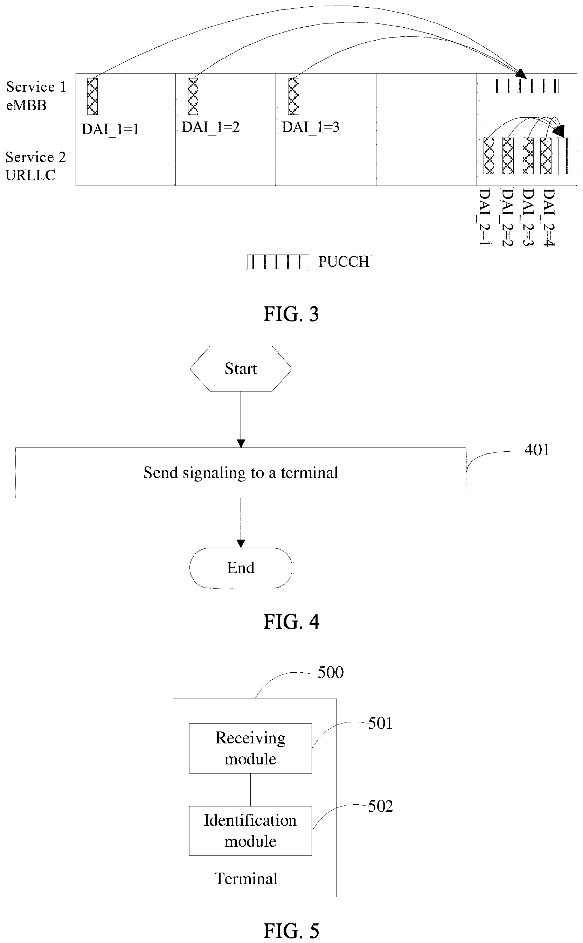

In this implementation, independent DAIs may be configured for different types, so that DAI counting is separately performed on each type of signaling, to further improve the reliability of signaling transmission. For example, as shown in FIG. 3, independent DAI_1 counting is used for the eMBB service and independent DAI_2 counting is used for the URLLC service, so that the terminal can discover a missing eMBB service and a missing URLLC service in a timely manner.

Further, because reliability of PDCCHs of different services is not the same, a separate counter (counter DAI) counting function may be used to independently calculate a quantity of PDCCHs for PDCCHs scheduled by different services.

In an optional implementation, the first information includes at least one of the following:
signaling format information, identifier information, control channel configuration information, priority information, resource indication information, modulation and coding scheme information, and feedback acknowledgement information.

In this implementation, independent DAIs may be configured for different signaling formats, or that the signaling includes or does not include the DAI is configured for different signaling formats; and
independent DAIs may be configured for different identifier information, or that the signaling includes or does not include the DAI is configured for different identifier information; and
independent DAIs may be configured for different control channel configuration information, or that the signaling includes or does not include the DAI is configured for different control channel configuration information; and
independent DAIs may be configured for different priority information, or that the signaling includes or does not include the DAI is configured for different priority information; and
independent DAIs may be configured for different resource indication information, or that the signaling includes or does not include the DAI is configured for different resource indication information; and
independent DAIs may be configured for different modulation and coding scheme information, or that the signaling includes or does not include the DAI is configured for different modulation and coding scheme information; and
independent DAIs may be configured for different feedback acknowledgement information, or that the signaling includes or does not include the DAI is configured for different feedback acknowledgement information.

In this implementation, a separate counter DAI field may be configured for a feature of each service, to independently perform DAI counting for each service, thereby further improving the reliability of signaling transmission.

The signaling format information is used to indicate a format of the signaling, for example, a DCI format.

The control channel configuration information may include at least one of the following:
control resource set (control resource set, CORESET) information for the signaling and search space information for the signaling.

The CORESET information for the signaling is used to indicate a CORESET corresponding to the signaling, and the search space information for the signaling is used to indicate search space corresponding to the signaling.

The identifier information may include at least one of the following: a radio network temporary identifier (Radio Network Temporary Identifier, RNTI) of the signaling and scrambling information for the signaling.

The RNTI of the signaling may be an RNTI corresponding to the signaling, and the scrambling information for the signaling may be scrambling information corresponding to the signaling.

The priority information may include at least one of the following:
priority indication information and service type indication information.

The priority indication information may be a service priority corresponding to the signaling, and the service type indication information may be a service type corresponding to the signaling.

The feedback acknowledgement information includes type information of a HARQ-ACK codebook corresponding to the signaling.

The modulation and coding scheme information may be an MCS table corresponding to the signaling, index information of the MCS table, or the like.

The resource indication information may include at least one of the following:
resource indication information used to indicate a transmission resource of data or control information; and
indication information used to indicate pilot mapping type information for data transmission or control information transmission.

The transmission resource may be at least one of a time domain resource and a frequency domain resource.

For example, the signaling is DCI, and the first information may include one or more items in the following table.

**Table 1: Signaling list**

| |
|---|
| Related to a DCI format: DCI format |
| Related to an identifier: Radio network temporary identifier RNTI corresponding to the DCI and scrambling information corresponding to the DCI |
| Related to control channel configuration: Control resource set CORESET corresponding to the DCI and search space corresponding to the DCI |
| Related to a service priority: Priority indication information carried in the DCI, and service type indication information carried in the DCI |
| Related to a resource indication: Resource indication information carried in the DCI, where the resource indication is used to indicate a time domain resource and/or a frequency domain resource for transmitting data or control information; or pilot mapping type information that is carried in the DCI and that is used to indicate data or control information transmission |
| Other correlation: Modulation and coding scheme MCS table corresponding to the DCI, and a type of a HARQ-ACK codebook corresponding to the DCI |

It should be noted that in this embodiment of the present disclosure, a relationship between each type of first information and whether the signaling includes the DAI may be preconfigured, so that the terminal may accurately determine, based on the first information, whether the signaling includes the DAI. For example, the network may configure, in advance for each service by using higher layer signaling or other signaling, whether DAI information needs to be carried in the PDCCH. Alternatively, a type of a DAI corresponding to each type of first information may be preconfigured, for example, a HARQ-ACK codebook or a service corresponding to a DAI corresponding to each type of first information is preconfigured.

In an optional implementation, the determining whether the signaling includes a DAI includes:
determining, based on first configuration information, whether the signaling includes the DAI, where the first configuration information is used to configure a relationship between the first information and whether the signaling includes the DAI.

The first configuration information may be preconfigured by the terminal, preconfigured by a network for the terminal, or agreed in a protocol.

The configuring a relationship between the first information and whether the signaling includes the DAI may be: indicating first information corresponding to a case in which the signaling includes the DAI, and indicating first information corresponding to a case in which the signaling does not include the DAI.

In this implementation, whether the signaling includes the DAI may be accurately determined based on the first configuration information.

In an optional implementation, the identifying a type of the DAI in the signaling includes:
identifying a HARQ-ACK codebook corresponding to the DAI in the signaling; or
identifying a service corresponding to the DAI in the signaling.

The HARQ-ACK codebook corresponding to the DAI may be a HARQ-ACK codebook to which the DAI belongs, and the service corresponding to the DAI may be a service to which the DAI belongs. Therefore, a HARQ-ACK codebook or a service to which the DAI belongs can be determined.

In this implementation, separate DAI counting may be configured for different HARQ-ACK codebooks or services, that is, the counter DAI is counted separately based on each service or HARQ-ACK codebook, to further improve reliability of signaling transmission.

In this embodiment of the present disclosure, a HARQ-ACK process fed back by a transport block-level (transport block-level, TB-level) may be supported. In this process, each TB corresponds to feedback of one HARQ-ACK bit, supports multiple DL HARQ processes of each terminal, and also supports a single DL HARQ process of each terminal. The terminal may indicate a minimum HARQ processing time capability of the terminal, where the minimum HARQ processing time means minimum time required from receiving of downlink (Downlink) data to corresponding HARQ-ACK transmission timing. The eMBB and the URLLC can support asynchronous and adaptive Downlink HARQ. For a terminal, HARQ-ACK feedbacks of multiple PDSCHs may be transmitted in one UL data/control area in terms of time, thereby forming a HARQ-ACK codebook in UL. In addition, timing between receiving of a PDSCH and a corresponding ACK/NACK may be specified in the DCI. For the timing, refer to PDCSCH-to-HARQ timing indicators in DCI 1_0 and DCI 1_1.

In an optional implementation, the identifying a type of the DAI in the signaling includes:
identifying the type of the DAI in the signaling based on second configuration information, where the second configuration information is used to configure a relationship between the first information and the type of the DAI.

The configuring a relationship between the first information and the type of the DAI may be: indicating a type of a DAI corresponding to each type of first information. For example, in each type of first information, a HARQ-ACK codebook or a service corresponding to the DAI is indicated, to dynamically determine, based on the second configuration information and the first information, a HARQ-ACK codebook or a service to which the DAI belongs.

In this implementation, the type of the DAI may be accurately determined based on the second configuration information.

In this embodiment of the present disclosure, the reliability of signaling transmission can be improved by using the foregoing DAI determining method. A future 5G system is used as an example. In the future 5G system, there is a case in which multiple services are concurrent. For example, a user is performing high-speed eMBB downloading while receiving a low-delay URLLC service. Reliability and a time sequence of PDCCHs used to schedule different types of services are not the same. In this embodiment of the present disclosure, the counter DAI field may be separately configured based on a feature of each service, and the counter DAI is separately counted based on each service or HARQ-ACK codebook, to ensure that PDCCH receiving meets different reliability requirements based on different services.

FIG. 4 is a flowchart of another DAI determining method according to an embodiment of the present disclosure. The method is applied to a network device. As shown in FIG. 4, the method includes the following steps.

Step 401: Send signaling to a terminal, where the signaling includes first information, the first information is used by the terminal to perform DAI identification in the signaling, and the DAI identification includes at least one of the following:
determining whether the signaling includes a DAI; and
identifying a type of the DAI in the signaling.

Optionally, when the signaling is signaling for a first service, the signaling includes the DAI; or
when the signaling is signaling for a second service, the signaling does not include the DAI.

Optionally, the type of the DAI corresponds to a type of the signaling.

Optionally, the first information includes at least one of the following:
signaling format information, identifier information, control channel configuration information, priority information, resource indication information, modulation and coding scheme information, and feedback acknowledgement information.

Optionally, the control channel configuration information includes at least one of the following:
CORESET information for the signaling and search space information for the signaling.

Optionally, the identifier information includes at least one of the following: an RNTI of the signaling and scrambling information for the signaling.

Optionally, the priority information includes at least one of the following:
priority indication information and service type indication information.

Optionally, the feedback acknowledgement information includes type information of a hybrid automatic repeat request acknowledgement codebook HARQ-ACK codebook corresponding to the signaling.

Optionally, the resource indication information includes at least one of the following:
resource indication information used to indicate a transmission resource of data or control information; and
indication information used to indicate pilot mapping type information for data transmission or control information transmission.

Optionally, the identifying a type of the DAI in the signaling includes:
identifying a HARQ-ACK codebook corresponding to the DAI in the signaling, or
identifying a service corresponding to the DAI in the signaling.

Optionally, the signaling is physical layer signaling or higher layer signaling.

It should be noted that this embodiment is used as an implementation of a network device side corresponding to the embodiment shown in FIG. 2. For a specific implementation of this embodiment, reference may be made to related descriptions of the embodiment shown in FIG. 2. To avoid repetition, details are not described in this embodiment. In this embodiment, the reliability of signaling transmission can also be improved.

FIG. 5 is a structural diagram of a terminal according to an embodiment of the present disclosure. As shown in FIG. 5, a terminal 500 includes:
a receiving module 501, configured to receive signaling, where the signaling includes first information; and
an identification module 502, configured to perform DAI identification in the signaling based on the first information, where the DAI identification includes at least one of the following:
   determining whether the signaling includes a DAI; and
   identifying a type of the DAI in the signaling.

Optionally, when the signaling is signaling for a first service, the signaling includes the DAI; or
when the signaling is signaling for a second service, the signaling does not include the DAI.

Optionally, the type of the DAI corresponds to a type of the signaling.

Optionally, the first information includes at least one of the following:
signaling format information, identifier information, control channel configuration information, priority information, resource indication information, modulation and coding scheme information, and feedback acknowledgement information.

Optionally, the control channel configuration information includes at least one of the following:
control resource set CORESET information for the signaling and search space information for the signaling.

Optionally, the identifier information includes at least one of the following: an RNTI of the signaling and scrambling information for the signaling.

Optionally, the priority information includes at least one of the following:
priority indication information and service type indication information.

Optionally, the feedback acknowledgement information includes type information of a HARQ-ACK codebook corresponding to the signaling.

Optionally, the resource indication information includes at least one of the following:
resource indication information used to indicate a transmission resource of data or control information; and
indication information used to indicate pilot mapping type information for data transmission or control information transmission.

Optionally, the determining whether the signaling includes a DAI includes:
determining, based on first configuration information, whether the signaling includes the DAI, where the first configuration information is used to configure a relationship between the first information and whether the signaling includes the DAI.

Optionally, the identifying a type of the DAI in the signaling includes:
identifying a HARQ-ACK codebook corresponding to the DAI in the signaling, or
identifying a service corresponding to the DAI in the signaling.

Optionally, the identifying a type of the DAI in the signaling includes:
identifying the type of the DAI in the signaling based on second configuration information, where the second configuration information is used to configure a relationship between the first information and the type of the DAI.

Optionally, the signaling is physical layer signaling or higher layer signaling.

The terminal provided in this embodiment of the present disclosure can implement processes implemented by the terminal in the method embodiment of FIG. 2. To avoid repetition, details are not described herein again. In addition, reliability of signaling transmission can be improved.

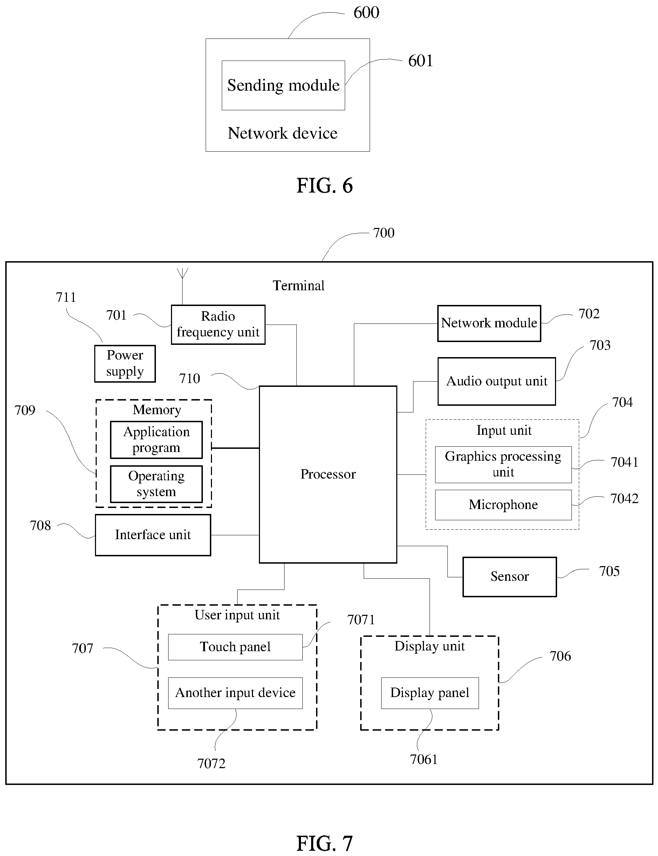

FIG. 6 is a structural diagram of a network device according to an embodiment of the present disclosure. As shown in FIG. 6, a network device 600 includes:
a sending module 601, configured to send signaling to a terminal, where the signaling includes first information, the first information is used by the terminal to perform DAI identification in the signaling, and the DAI identification includes at least one of the following:
determining whether the signaling includes a DAI; and
identifying a type of the DAI in the signaling.

Optionally, when the signaling is signaling for a first service, the signaling includes the DAI; or
when the signaling is signaling for a second service, the signaling does not include the DAI.

Optionally, the type of the DAI corresponds to a type of the signaling.

Optionally, the first information includes at least one of the following:
signaling format information, identifier information, control channel configuration information, priority information, resource indication information, modulation and coding scheme information, and feedback acknowledgement information.

Optionally, the control channel configuration information includes at least one of the following:
CORESET information for the signaling and search space information for the signaling.

Optionally, the identifier information includes at least one of the following: an RNTI of the signaling and scrambling information for the signaling.

Optionally, the priority information includes at least one of the following:
priority indication information and service type indication information.

Optionally, the feedback acknowledgement information includes type information of a HARQ-ACK codebook corresponding to the signaling.

Optionally, the resource indication information includes at least one of the following:
resource indication information used to indicate a transmission resource of data or control information; and
indication information used to indicate pilot mapping type information for data transmission or control information transmission.

Optionally, the identifying a type of the DAI in the signaling includes:
identifying a HARQ-ACK codebook corresponding to the DAI in the signaling, or identifying a service corresponding to the DAI in the signaling.

Optionally, the signaling is physical layer signaling or higher layer signaling.

The network device provided in this embodiment of the present disclosure can implement processes implemented by the network device in the method embodiment of FIG. 4. To avoid repetition, details are not described herein again. In addition, reliability of signaling transmission can be improved.

FIG. 7 is a schematic diagram of a hardware structure of a terminal according to embodiments of the present disclosure.

A terminal 700 includes but is not limited to components such as a radio frequency unit 701, a network module 702, an audio output unit 703, an input unit 704, a sensor 705, a display unit 706, a user input unit 707, an interface unit 708, a memory 709, a processor 710, and a power supply 711. A person skilled in the art may understand that a structure of the terminal shown in FIG. 7 does not constitute a limitation on the terminal, and the terminal may include more or fewer components than those shown in the figure, or combine some components, or have different component arrangements. In this embodiment of the present disclosure, the terminal includes but is not limited to a mobile phone, a tablet computer, a laptop computer, a palmtop computer, an in-vehicle terminal, a robot, a wearable device, a pedometer, and the like.

The radio frequency unit 701 is configured to receive signaling, where the signaling includes first information.

The processor 710 is configured to perform DAI identification in the signaling based on the first information, where the DAI identification includes at least one of the following:
determining whether the signaling includes a DAI; and
identifying a type of the DAI in the signaling.

Optionally, when the signaling is signaling for a first service, the signaling includes the DAI; or
when the signaling is signaling for a second service, the signaling does not include the DAI.

Optionally, the type of the DAI corresponds to a type of the signaling.

Optionally, the first information includes at least one of the following:
signaling format information, identifier information, control channel configuration information, priority information, resource indication information, modulation and coding scheme information, and feedback acknowledgement information.

Optionally, the control channel configuration information includes at least one of the following:
CORESET information for the signaling and search space information for the signaling.

Optionally, the identifier information includes at least one of the following: a radio network temporary identifier RNTI of the signaling and scrambling information for the signaling.

Optionally, the priority information includes at least one of the following:
priority indication information and service type indication information.

Optionally, the feedback acknowledgement information includes type information of a HARQ-ACK codebook corresponding to the signaling.

Optionally, the resource indication information includes at least one of the following:
resource indication information used to indicate a transmission resource of data or control information; and
indication information used to indicate pilot mapping type information for data transmission or control information transmission.

Optionally, the determining whether the signaling includes a DAI includes:
determining, based on first configuration information, whether the signaling includes the DAI, where the first configuration information is used to configure a relationship between the first information and whether the signaling includes the DAI.

Optionally, the identifying a type of the DAI in the signaling includes:
identifying a HARQ-ACK codebook corresponding to the DAI in the signaling, or identifying a service corresponding to the DAI in the signaling.

Optionally, the identifying a type of the DAI in the signaling includes:
identifying the type of the DAI in the signaling based on second configuration information, where the second configuration information is used to configure a relationship between the first information and the type of the DAI.

Optionally, the signaling is physical layer signaling or higher layer signaling.

The terminal can improve the reliability of signaling transmission.

It should be understood that, in this embodiment of the present disclosure, the radio frequency unit 701 may be configured to receive and send information or receive and send a signal in a call process. Specifically, after downlink data from a base station is received, the processor 710 processes the downlink data. In addition, uplink data is sent to the base station. Generally, the radio frequency unit 701 includes but is not limited to an antenna, at least one amplifier, a transceiver, a coupler, a low noise amplifier, a duplexer, and the like. In addition, the radio frequency unit 701 may further communicate with a network and another device by using a wireless communication system.

The terminal provides wireless broadband Internet access for a user by using the network module 702, for example, helping the user send and receive an email, browse a web page, and access streaming media.

The audio output unit 703 may convert audio data received by the radio frequency unit 701 or the network module 702 or stored in the memory 709 into an audio signal and output as sound. In addition, the audio output unit 703 may further provide audio output (for example, call signal receiving sound or message receiving sound) related to a specific function performed by the terminal 700. The audio output unit 703 includes a loudspeaker, a buzzer, a telephone receiver, and the like.

The input unit 704 is configured to receive an audio or video signal. The input unit 704 may include a graphics processing unit (Graphics Processing Unit, GPU) 7041 and a microphone 7042. The graphics processing unit 7041 processes image data of a static picture or a video obtained by an image capture apparatus (such as a camera) in a video capture mode or an image capture mode. A processed image frame may be displayed on the display unit 706. The image frame processed by the graphics processing unit 7041 may be stored in the memory 709 (or another storage medium) or sent by using the radio frequency unit 701 or the network module 702. The microphone 7042 may receive sound and can process such sound into audio data. The processed audio data may be output by being converted into a format that may be sent to a mobile communications base station by using the radio frequency unit 701 in a telephone call mode.

The terminal 700 further includes at least one sensor 705, such as an optional sensor, a motion sensor, and another sensor. Specifically, the optional sensor includes an ambient light sensor and a proximity sensor. The ambient light sensor may adjust luminance of the display panel 7061 based on brightness of ambient light, and the proximity sensor may disable the display panel 7061 and/or backlight when the terminal 700 approaches an ear. As a type of the motion sensor, an accelerometer sensor may detect magnitude of an acceleration in each direction (generally three axes), and may detect magnitude and a direction of gravity when being static. The accelerometer sensor may be used for recognizing a terminal gesture (for example, horizontal and vertical screen switching, a related game, or magnetometer posture calibration), a function related to vibration recognition (for example, a pedometer or a strike), or the like. The sensor 705 may further include a fingerprint sensor, a pressure sensor, an iris sensor, a molecular sensor, a gyroscope, a barometer, a hygrometer, a thermometer, an infrared sensor, and the like. This is not described herein.

The display unit 706 is configured to display information entered by the user or information provided for the user. The display unit 706 may include a display panel 7061, and the display panel 7061 may be configured in a form of a liquid crystal display (Liquid Crystal Display, LCD), an organic light-emitting diode (Organic Light-Emitting Diode, OLED), or the like.

The user input unit 707 may be configured to receive input digit or character information and generate key signal input related to user setting and function control of the terminal. Specifically, the user input unit 707 includes a touch panel 7071 and another input device 7072. The touch panel 7071, also referred to as a touchscreen, may collect a touch operation performed by the user on or near the touch panel 7071 (for example, an operation performed by the user on or near the touch panel 7071 by using any suitable object or accessory such as a finger or a stylus). The touch panel 7071 may include two parts: a touch detection apparatus and a touch controller. The touch detection apparatus detects a touch position of the user, detects a signal brought by the touch operation, and transmits the signal to the touch controller. The touch controller receives touch information from the touch detection apparatus, converts the touch information into contact coordinates, sends the contact coordinates to the processor 710, and can receive and execute a command sent by the processor 710. In addition, the touch panel 7071 may be implemented by using a plurality of types such as a resistive type, a capacitive type, an infrared ray, and a surface acoustic wave. The user input unit 707 may include another input device 7072 in addition to the touch panel 7071. Specifically, the another input device 7072 may include but is not limited to one or more of a physical keyboard, a function key (such as a volume control key or an on/off key), a trackball, a mouse, a joystick, and the like. Details are not described herein.

Further, the touch panel 7071 may cover the display panel 7061. After detecting the touch operation on or near the touch panel 7071, the touch panel 7061 transmits the touch operation to the processor 710 to determine a type of a touch event, and then the processor 710 provides corresponding visual output on the display panel 7061 based on the type of the touch event. In FIG. 7, the touch panel 7071 and the display panel 7061 are used as two independent components to implement input and output functions of the terminal. However, in some embodiments, the touch panel 7071 and the display panel 7061 may be integrated to implement the input and output functions of the terminal. This is not specifically limited herein.

The interface unit 708 is an interface connecting an external apparatus to the terminal 700. For example, the external apparatus may include a wired or wireless headset port, an external power supply (or battery charger) port, a wired or wireless data port, a storage card port, a port configured to connect to an apparatus with an identification module, an audio input/output (input/output, I/O) port, a video I/O port, a headset port, and the like. The interface unit 708 may be configured to receive input (for example, data information and power) from the external apparatus and transmit the received input to one or more elements in the terminal 700, or may be configured to transmit data between the terminal 700 and the external apparatus.

The memory 709 may be configured to store a software program and various data. The memory 709 may mainly include a program storage area and a data storage area. The program storage area may store an operating system, an application program required by at least one function (such as a sound play function or an image play function), and the like. The data storage area may store data (such as audio data or an address book) or the like created based on use of the mobile phone. In addition, the memory 709 may include a high-speed random access memory, and may further include a non-volatile memory such as at least one magnetic disk storage component, a flash memory component, or another volatile solid-state storage component.

The processor 710 is a control center of the terminal, and is connected to all parts of the entire terminal by using various interfaces and lines, and performs various functions of the terminal and processes data by running or executing the software program and/or the module that are stored in the memory 709 and invoking the data stored in the memory 709, to implement overall monitoring on the terminal. The processor 710 may include one or more processing units. Optionally, the processor 710 may be integrated with an application processor and a modem processor. The application processor mainly processes an operating system, a user interface, an application program, and the like, and the modem processor mainly processes wireless communication. It may be understood that the modem processor may also not be integrated into the processor 710.

The terminal 700 may further include the power supply 711 (such as a battery) that supplies power to each component. Optionally, the power supply 711 may be logically connected to the processor 710 by using a power management system, to implement functions such as charging, discharging, and power consumption management by using the power management system.

In addition, the terminal 700 includes some function modules not shown, and details are not described herein.

Optionally, an embodiment of the present disclosure further provides a terminal, including a processor 710, a memory 709, and a computer program that is stored in the memory 709 and executable on the processor 710. When the computer program is executed by the processor 710, the process of the DAI determining method in the foregoing method embodiments is implemented, and a same technical effect can be achieved. To avoid repetition, details are not described herein.

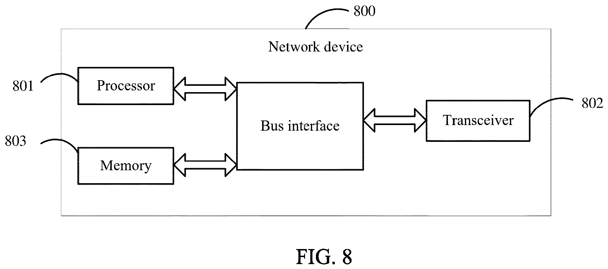

FIG. 8 is a structural diagram of another network device according to an embodiment of the present disclosure. As shown in FIG. 8, a network device 800 includes a processor 801, a transceiver 802, a memory 803, and a bus interface.

The transceiver 802 is configured to send signaling to a terminal, where the signaling includes first information, the first information is used by the terminal to perform DAI identification in the signaling, and the DAI identification includes at least one of the following:
determining whether the signaling includes a DAI; and
identifying a type of the DAI in the signaling.

Optionally, when the signaling is signaling for a first service, the signaling includes the DAI; or
when the signaling is signaling for a second service, the signaling does not include the DAI.

Optionally, the type of the DAI corresponds to a type of the signaling.

Optionally, the first information includes at least one of the following:
signaling format information, identifier information, control channel configuration information, priority information, resource indication information, modulation and coding scheme information, and feedback acknowledgement information.

Optionally, the control channel configuration information includes at least one of the following:
CORESET information for the signaling and search space information for the signaling.

Optionally, the identifier information includes at least one of the following: an RNTI of the signaling and scrambling information for the signaling.

Optionally, the priority information includes at least one of the following:
priority indication information and service type indication information.

Optionally, the feedback acknowledgement information includes type information of a HARQ-ACK codebook corresponding to the signaling.

Optionally, the resource indication information includes at least one of the following:
resource indication information used to indicate a transmission resource of data or control information; and
indication information used to indicate pilot mapping type information for data transmission or control information transmission.

Optionally, the identifying a type of the DAI in the signaling includes:
identifying a HARQ-ACK codebook corresponding to the DAI in the signaling, or identifying a service corresponding to the DAI in the signaling.

Optionally, the signaling is physical layer signaling or higher layer signaling.

The network device can improve reliability of signaling transmission.

The transceiver 802 is configured to receive and send data under the control of the processor 801, and the transceiver 802 includes at least two antenna ports.

In FIG. 8, a bus architecture may include any quantity of interconnected buses and bridges, and is specifically linked by various circuits of one or more processors represented by the processor 801 and a memory represented by the memory 803. The bus architecture may further link various other circuits such as a periphery device, a voltage regulator, and a power management circuit that are known in the art. Therefore, these are not further described in the present specification. The bus interface provides interfaces. The transceiver 802 may be a plurality of elements, in other words, includes a transmitter and a receiver, and provides a unit configured to communicate with various other apparatuses on a transmission medium. For different pieces of user equipment, the user interface 804 may further be an interface that can be externally or internally connected to a required device. The connected device includes but is not limited to a keypad, a display, a loudspeaker, a microphone, a joystick, and the like.

The processor 801 is responsible for managing the bus architecture and common processing, and the memory 803 may store data used when the processor 801 performs an operation.

Optionally, an embodiment of the present disclosure further provides a network device, including a processor 801, a memory 803, and a computer program that is stored in the memory 803 and executable on the processor 801. When the computer program is executed by the processor 801, the process of the DAI determining method in the foregoing method embodiments is implemented, and a same technical effect can be achieved. To avoid repetition, details are not described herein.

An embodiment of the present disclosure further provides a computer-readable storage medium. A computer program is stored in the computer-readable storage medium. When the computer program is executed by a processor, the DAI determining method on a terminal side provided in the embodiments of the present disclosure is implemented; or when the computer program is executed by the processor, the DAI determining method on a network device side provided in the embodiments of the present disclosure is implemented, and a same technical effect can be achieved. To avoid repetition, details are not described herein again. The computer-readable storage medium includes a read-only memory (Read-Only Memory, ROM for short), a random access memory (Random Access Memory, RAM for short), a magnetic disk, an optical disc, or the like.

It should be noted that in this specification, the term "include", "including", or any other variant is intended to cover non-exclusive inclusion, so that a process, method, article, or apparatus that includes a series of elements includes not only those elements but also other elements that are not explicitly listed, or includes elements inherent to such a process, method, article, or apparatus. In the absence of more restrictions, an element defined by the statement "including a..." does not exclude another same element in a process, method, article, or apparatus that includes the element.

According to the foregoing descriptions of the implementations, a person skilled in the art may clearly understand that the foregoing method embodiments may be implemented by using software and a required universal hardware platform, or certainly may be implemented by using hardware. However, in many cases, the former is a better implementation. Based on such an understanding, the technical solutions of the present disclosure essentially or the part contributing to related technologies may be implemented in a form of a software product. The computer software product is stored in a storage medium (such as a ROM/RAM, a magnetic disk, or an optical disc) and includes several instructions for instructing a terminal (which may be a mobile phone, a computer, a server, an air conditioner, or a network device) to execute the methods described in the embodiments of the present disclosure.

A person of ordinary skill in the art may recognize that, with reference to the examples described in the embodiments disclosed herein, units and algorithm steps may be implemented by electronic hardware or a combination of computer software and electronic hardware. Whether these functions are implemented by hardware or software depends on specific applications and design constraints of the technical solutions. A person skilled in the art may use different methods for each particular application to implement the described functions, but such an implementation should not be considered to be outside the scope of the present disclosure.

It may be clearly understood by a person skilled in the art that, for convenience and brevity of description, for a specific working process of the foregoing described system, apparatus, and unit, reference may be made to a corresponding process in the foregoing method embodiments, and details are not described herein again.

In the embodiments provided in this application, it should be understood that the disclosed apparatus and method may be implemented in another manner. For example, the described apparatus embodiment is merely an example. For example, the unit division is merely logical function division. In actual implementation, there may be another division manner. For example, multiple units or components may be combined or integrated into another system, or some features may be ignored or not performed. In addition, displayed or discussed mutual coupling or direct coupling or communication connection may be implemented by using some interfaces, an indirect coupling or communication connection between apparatuses or units may be in an electrical, mechanical, or another form.

Units described as separate parts may or may not be physically separate, and parts displayed as units may or may not be physical units, may be located in one place, or may be distributed on multiple network units. Some or all of the units may be selected according to an actual requirement to implement the objectives of the solutions in the embodiments.

In addition, functional units in the embodiments of the present disclosure may be integrated into one processing unit, or each unit may exist separately physically, or two or more units may be integrated into one unit.

The function may be stored in a computer-readable storage medium when being implemented in the form of a software functional unit and sold or used as an independent product. Based on such an understanding, the technical solutions of the present disclosure essentially or the part contributing to related technologies may be implemented in a form of a software product. The computer software product is stored in a storage medium and includes several instructions for instructing a computer device (which may be a personal computer, a server, or a network device) to perform all or some steps in the methods described in the embodiments of the present disclosure. The foregoing storage medium includes any medium that can store program code, such as a USB flash drive, a removable hard disk, a ROM, a RAM, a magnetic disk, or an optical disc.

A person of ordinary skill in the art may understand that all or a part of the processes in the methods in the foregoing embodiments may be implemented by a computer program by controlling related hardware. The program may be stored in a computer-readable storage medium. When the program is executed, the processes in the foregoing methods embodiments may be included. The storage medium may be a magnetic disk, an optical disc, a read-only memory (Read-Only Memory, ROM), a random access memory (Random Access Memory, RAM), or the like.

It may be understood that the embodiments described in the embodiments of this disclosure may be implemented by hardware, software, firmware, middleware, microcode, or a combination thereof. For hardware implementation, a module, a unit, and a subunit may be implemented in one or more application-specific integrated circuits (Application Specific Integrated Circuits, ASIC), a digital signal processor (Digital Signal Processor, DSP), a digital signal processing device (DSP Device, DSPD), a programmable logic device (Programmable Logic Device, PLD), a field-programmable gate array (Field-Programmable Gate Array, FPGA), a general-purpose processor, a controller, a microcontroller, a microprocessor, another electronic unit configured to perform the functions described in the present disclosure, or a combination thereof.

For software implementations, the techniques described in the embodiments of the present disclosure may be implemented by modules (for example, processes or functions) that perform the functions described in the embodiments of the present disclosure. Software code may be stored in a memory and executed by a processor. The memory may be implemented in or outside the processor.

The scope of protection of the invention is limited by the appended claims.

## Claims

1. A downlink assignment index, DAI, determining method, applied to a terminal (11), the method comprising:
receiving (201) signaling, wherein the signaling comprises first information; and
identifying, a type of DAI in the signaling based on the first information, wherein
the first information comprises feedback acknowledgement information, and the feedback acknowledgement information comprises type information of a hybrid automatic repeat request acknowledgement, HARQ-ACK, codebook corresponding to the signaling.

2. The method according to claim 1, wherein the first information further comprises at least one of: signaling format information, identifier information, control channel configuration information, priority information, resource indication information, and modulation and coding scheme information.

3. The method according to claim 2, wherein the control channel configuration information comprises at least one of:
control resource set, CORESET, information for the signaling and search space information for the signaling;
the identifier information comprises at least one of: a radio network temporary identifier, RNTI, of the signaling and scrambling information for the signaling;
the resource indication information comprises at least one of:
resource indication information used to indicate a transmission resource of data or control information; and
indication information used to indicate pilot mapping type information for data transmission or control information transmission.

4. The method according to claim 2, wherein the priority information comprises at least one of: priority indication information and service type indication information.

5. The method according to any one of claims 1 to 4, wherein the identifying the type of the DAI in the signaling comprises:
identifying the type of the DAI in the signaling based on second configuration information, wherein the second configuration information is used to configure a relationship between the first information and the type of the DAI.

6. The method according to any one of claims 1 to 5, wherein the identifying a type of the DAI in the signaling comprises:
identifying a hybrid automatic repeat request acknowledgement, HARQ-ACK, codebook corresponding to the DAI in the signaling, or identifying a service corresponding to the DAI in the signaling.

7. A downlink assignment index, DAI, determining method, applied to a network device (12), the method comprising:
sending (401) signaling to a terminal (11), wherein the signaling comprises first information, the first information is used by the terminal (11) to identify a type of DAI in the signaling, wherein
the first information comprises feedback acknowledgement information, and the feedback acknowledgement information comprises type information of a hybrid automatic repeat request acknowledgement, HARQ-ACK, codebook corresponding to the signaling.

8. The method according to claim 7, wherein the first information further comprises at least one of: signaling format information, identifier information, control channel configuration information, priority information, resource indication information, and modulation and coding scheme information.

9. The method according to claim 8, wherein the priority information comprises at least one of:
priority indication information and service type indication information.

10. The method according to any one of claims 7 to 9, wherein the identifying a type of the DAI in the signaling comprises:
identifying a hybrid automatic repeat request acknowledgement HARQ-ACK codebook corresponding to the DAI in the signaling; or
identifying a service corresponding to the DAI in the signaling.

11. A terminal (700), comprising: a memory (709), a processor (710), and a program that is stored in the memory (709) and executable on the processor (710), wherein when the program is executed by the processor (710), steps in the DAI determining method according to any one of claims 1 to 6 are implemented.

12. A network device (800), comprising: a memory (803), a processor (801), and a program that is stored in the memory (803) and executable on the processor (801), wherein when the program is executed by the processor (801), steps in the DAI determining method according to any one of claims 7 to 10 are implemented.

## Patentansprüche

1. Bestimmungsverfahren für Downlink-Zuweisungsindex, DAI, angewandt auf ein Endgerät (11), das Verfahren
umfassend:
Empfangen (201) einer Signalisierung, wobei die Signalisierung erste Informationen umfasst; und
identifizieren eines DAI-Typs in der Signalisierung basierend auf den ersten Informationen, wobei
die ersten Informationen Rückmeldungsbestätigungsinformationen umfassen, und die Rückmeldungsbestätigungsinformationen Typinformationen eines Codebuchs für hybride automatische Wiederholungsanforderungsbestätigung, HARQ-ACK, umfasst, das der Signalisierung entspricht.

2. Verfahren nach Anspruch 1, wobei die ersten Informationen ferner mindestens eines von Folgenden umfassen: Signalisierungsformatinformationen, Identifizierungsinformationen, Steuerkanalkonfigurationsinformationen, Prioritätsinformationen, Ressourcenangabeinformationen und Modulations- und Codierungsschemainformationen.

3. Verfahren nach Anspruch 2, wobei die Steuerkanalkonfigurationsinformationen mindestens eines von Folgenden umfassen:
Informationen für Steuerressourcensatz, CORESET, für die Signalisierung und Suchrauminformationen für die Signalisierung;
wobei die Identifizierungsinformation mindestens eines von Folgenden umfassen: eine temporäre Funknetzkennung (RNTI) der Signalisierung und Verwürfelungsinformationen für die Signalisierung;
die Ressourcenangabeinformationen mindestens eines von Folgenden umfassen:
Ressourcenangabeinformationen, die verwendet werden, um eine Übertragungsressource von Daten oder Steuerinformationen anzugeben; und
Angabeinformationen, die verwendet wird, um Vorsteuermappingtypinformationen für Datenübertragung oder Steuerinformationsübertragung anzugeben.

4. Verfahren nach Anspruch 2, wobei die Prioritätsinformation mindestens eines von Folgenden umfassen: Prioritätsangabeinformationen und Diensttypangabeinformationen.

5. Verfahren nach einem der Ansprüche 1 bis 4, wobei das Identifizieren des Typs der DAI in der Signalisierung Folgendes umfasst:
Identifizieren des Typs der DAI in der Signalisierung basierend auf zweiten Konfigurationsinformationen, wobei die zweiten Konfigurationsinformationen verwendet werden, um eine Beziehung zwischen den ersten Informationen und dem Typ der DAI zu konfigurieren.

6. Verfahren nach einem der Ansprüche 1 bis 5, wobei das Identifizieren eines Typs der DAI in der Signalisierung Folgendes umfasst:
Identifizieren eines Codebuchs für hybride automatische Wiederholungsanforderungsbestätigung, HARQ-ACK, das der DAI in der Signalisierung entspricht, oder Identifizieren eines Dienstes, der der DAI in der Signalisierung entspricht.

7. Bestimmungsverfahren für Downlink-Zuweisungsindex, DAI, angewandt auf eine Netzvorrichtung (12), das Verfahren umfassend:
Senden (401) einer Signalisierung an ein Endgerät (11), wobei die Signalisierung erste Informationen umfasst, wobei die ersten Informationen von dem Endgerät (11) verwendet werden, um einen Typ von DAI in der Signalisierung zu identifizieren, wobei
die ersten Informationen Rückmeldungsbestätigungsinformationen umfassen, und die Rückmeldungsbestätigungsinformationen Typinformationen eines Codebuchs für hybride automatische Wiederholungsanforderungsbestätigung, HARQ-ACK, umfasst, das der Signalisierung entspricht.

8. Verfahren nach Anspruch 7, wobei die ersten Informationen ferner mindestens eines von Folgenden umfassen: Signalisierungsformatinformationen, Identifizierungsinformationen, Steuerkanalkonfigurationsinformationen, Prioritätsinformationen, Ressourcenangabeinformationen und Modulations- und Codierungsschemainformationen.

9. Verfahren nach Anspruch 8, wobei die Prioritätsinformationen mindestens eines von Folgenden umfassen:
Prioritätsangabeinformationen und Diensttypangabeinformationen.

10. Verfahren nach einem der Ansprüche 7 bis 9, wobei das Identifizieren eines Typs der DAI in der Signalisierung Folgendes umfasst:
Identifizieren eines Codebuchs für hybride automatische Wiederholungsanforderungsbestätigung, HARQ-ACK, das der DAI in der Signalisierung entspricht; oder
Identifizieren eines Dienstes, der der DAI in der Signalisierung entspricht.

11. Endgerät (700), umfassend: einen Speicher (709), einen Prozessor (710) und ein Programm, das in dem Speicher (709) gespeichert und auf dem Prozessor (710) ausführbar ist, wobei, wenn das Programm von dem Prozessor (710) ausgeführt wird, Schritte in dem DAI-Bestimmungsverfahren nach einem der Ansprüche 1 bis 6 implementiert werden.

12. Netzvorrichtung (800), umfassend: einen Speicher (803), einen Prozessor (801) und ein Programm, das in dem Speicher (803) gespeichert und auf dem Prozessor (801) ausführbar ist, wobei, wenn das Programm von dem Prozessor (801) ausgeführt wird, Schritte in dem DAI-Bestimmungsverfahren nach einem der Ansprüche 7 bis 10 implementiert werden.

## Revendications

1. Procédé de détermination de l'indice d'assignation de la liaison descendante (DAI) appliquée à un terminal (11), le procédé
comprenant:
recevoir (201) une signalisation, dans lequel la signalisation comprend une première information ; et
identifier un type de DAI dans la signalisation sur la base des premières informations, dans lequel
la première information comprend une information d'accusé de réception de retour, et l'information d'accusé de réception de retour comprend une information de type d'un livre de code d'accusé de réception de demande de répétition automatique hybride, HARQ-ACK, correspondant à la signalisation.

2. Procédé selon la revendication 1, dans lequel la première information comprend en outre au moins l'une des informations suivantes : informations sur le format de signalisation, informations sur l'identifiant, informations sur la configuration du canal de contrôle, informations sur la priorité, informations sur l'indication des ressources, et informations sur le schéma de modulation et de codage.

3. Procédé selon la revendication 2, dans lequel les informations de configuration de canal de contrôle comprennent au moins l'un des éléments suivants :
les informations relatives à l'ensemble de ressources de contrôle, CORESET, pour la signalisation et les informations relatives à l'espace de recherche pour la signalisation ;
les informations d'identification comprennent au moins l'un des éléments suivants : un identificateur temporaire de réseau radio, RNTI, de la signalisation et des informations de brouillage pour la signalisation ;
les informations d'indication de ressource comprennent au moins l'un des éléments suivants :
les informations d'indication de ressource utilisées pour indiquer une ressource de transmission de données ou d'informations de contrôle ; et
les informations d'indication utilisées pour indiquer les informations de type de mappage pilote pour la transmission de données ou la transmission d'informations de contrôle.

4. Procédé selon la revendication 2, dans lequel les informations de priorité comprennent au moins l'une des informations suivantes : informations d'indication de priorité et informations d'indication de type de service.

5. Procédé selon l'une quelconque des revendications 1 à 4, dans lequel l'identification du type de DAI dans la signalisation comprend :
identifier le type de DAI dans la signalisation sur la base de la deuxième information de configuration, la deuxième information de configuration étant utilisée pour configurer une relation entre la première information et le type de DAI.

6. Procédé selon l'une quelconque des revendications 1 à 5, dans lequel l'identification d'un type de DAI dans la signalisation comprend :
l'identification d'un livre de codes d'accusé de réception de demande de répétition automatique hybride, HARQ-ACK, correspondant au DAI dans la signalisation, ou l'identification d'un service correspondant au DAI dans la signalisation.

7. Procédé de détermination de l'indice d'assignation de la liaison descendante (DAI) appliqué à un dispositif de réseau (12) comprenant :
envoyer (401) une signalisation à un terminal (11), dans laquelle la signalisation comprend une première information, la première information étant utilisée par le terminal (11) pour identifier un type de DAI dans la signalisation, dans lequel
la première information comprend une information d'accusé de réception de retour, et l'information d'accusé de réception de retour comprend une information de type d'un livre de code d'accusé de réception de demande de répétition automatique hybride, HARQ-ACK, correspondant à la signalisation.

8. Procédé selon la revendication 7, dans lequel la première information comprend en outre au moins l'une des informations suivantes : informations sur le format de signalisation, informations sur l'identifiant, informations sur la configuration du canal de contrôle, informations sur la priorité, informations sur l'indication des ressources, et informations sur le schéma de modulation et de codage.

9. Procédé selon la revendication 8, dans lequel l'information de priorité comprend au moins l'un des éléments suivants :
l'information d'indication de priorité et l'information d'indication du type de service.

10. Procédé selon l'une quelconque des revendications 7 à 9, dans lequel l'identification d'un type de DAI dans la signalisation comprend :
identifier un livre de codes d'accusé de réception de demande de répétition automatique hybride HARQ-ACK correspondant au DAI dans la signalisation ; ou
identifier un service correspondant au DAI dans la signalisation.

11. Terminal (700) comprenant : une mémoire (709), un processeur (710)et un programme stocké dans la mémoire (709) et pouvant être exécuté sur le processeur (710), dans lequel lorsque le programme est exécuté par le processeur (710), des étapes du procédé de détermination du DAI selon l'une quelconque des revendications 1 à 6 sont mises en œuvre.

12. Terminal (800) comprenant : une mémoire (803), un processeur (801) et un programme stocké dans la mémoire (803) et pouvant être exécuté sur le processeur (801), dans lequel lorsque le programme est exécuté par le processeur (801), des étapes du procédé de détermination du DAI selon l'une quelconque des revendications 7 à 10 sont mises en œuvre.
